# EUROPÄISCHE PATENTSCHRIFT

(11) **EP 2 593 608 B1**
(45) Veröffentlichungstag und Bekanntmachung des Hinweises auf die Patenterteilung: **02.07.2014**
(21) Anmeldenummer: 11738389.3
(22) Anmeldetag: 14.07.2011
(51) Int. Cl.: E02B 9/00, F03B 17/06

(54) **WASSERKRAFT-STAUDRUCKMASCHINE**
HYDROPOWER DYNAMIC-PRESSURE MACHINE
MACHINE HYDRAULIQUE À PRESSION DE BARRAGE

(30) Priorität: 14.07.2010 AT 11932010
(43) Veröffentlichungstag der Anmeldung: 22.05.2013
(73) Patentinhaber: Maschinenfabrik KBA-MÖDLING Aktiengesellschaft, 2344 Maria Enzersdorf (AT)
(72) Erfinder: ULM, Dietmar, 2384 Breitenfurt (AT)
(74) Vertreter: Sonn & Partner Patentanwälte
(86) Internationale Anmeldenummer: PCT/AT2011/000301
(87) Internationale Veröffentlichungsnummer: WO 2012/006648

(56) Entgegenhaltungen:
- WO-A1-2006/059094
- WO-A1-2009/074005
- US-A- 2 135 115
- US-A1- 2003 072 615

## Beschreibung

Die Erfindung betrifft eine Wasserkraft-Staudruckmaschine gemäß dem Oberbegriff von Anspruch 1.

Eine derartige Staudruckmaschine ist aus der AT 501 575 A1 bekannt, vgl. auch AT 404 973 B. Bei einer derartigen Staudruckmaschine wird das Laufrad derart in einem Gerinne angebracht, dass die Nabe des Laufrads das Wasser im Gerinne aufstauen kann, sodass stromaufwärts des Laufrads ein vergleichsweise hoher Oberwasserpegel und stromabwärts ein niedriger Unterwasserpegel im Betrieb erhalten werden. Durch die an der Nabe angebrachten Schaufeln werden Taschen zum Transport des Wassers gebildet, wobei im Betrieb der Wasserdruck ein Drehmoment um die Achse des Laufrads, die Achse der zylindrischen Nabe, bewirkt. Gemäß der AT 404 973 B werden die Laufräder in stationären Gestellen gelagert. In der AT 501 575 A1 wird darüber hinausgehend vorgeschlagen, das jeweilige Laufrad in einem im vertikalen Schnitt U-förmigen Rahmen zu lagern, der aus vertikalen Seitenplatten und einer diese Seitenplatten verbindenden Bodenplatte gebildet ist. Dieser Plattenrahmen kann weiters mit Hilfe von Führungen in Ortsbetonpfeiler eingeschoben werden, um so eine raschen Inbetriebnahme der Staudruckmaschine zu ermöglichen. Der aus Platten gebildete, das Laufrad lagernde Rahmen ist dabei jedoch verhältnismäßig aufwendig und schwer, sodass die Kosten hierfür relativ hoch sind, und überdies ist eine Anpassung der Staudruckmaschine an verschiedene Größenverhältnisse, z.B. Breiten des Gerinnes, vergleichsweise mühsam.

Diese konstruktiven Probleme und insbesondere die hohen Herstellungskosten brachten es bisher mit sich, dass die bekannten Staudruckmaschinen mangels Wirtschaftlichkeit kaum praktisch realisiert wurden.

Dieser Nachteil trifft auch beispielsweise auf die Wasserkraftanlage gemäß US 5,882,143 A zu, bei der ein vielbeiniges Gestell vorgesehen ist, das paarweise angeordnete obere horizontale Träger aufweist, denen entlang Wagen verfahrbar sind. Diese Wagen haben nach unten abstehende Führungen, in denen vertikal verstellbare Tragarme gelagert sind, an deren unteren Enden die jeweiligen Wasserräder gelagert sind. Bei einem hohen Wasserstand werden die Wasserräder samt den Wagen entlang der horizontalen Träger zu einem Damm hin verfahren, wobei überdies die Wasserräder angehoben werden; bei niedrigen Wasserstand werden die Wasserräder mit ihren Wagen horizontal vom Damm wegbewegt und überdies vertikal abgesenkt.

In der US 4,843,249 A ist andererseits eine Anlage mit einer Meereswellen-Turbine gezeigt, die an horizontalen Trägern eines vierbeinigen Gestells angebracht ist. Gegebenenfalls können hier mehrere derartige Gestelle mit Wasserrädern in V-Form aneinander gereiht angebracht werden.

Eine ähnlich aufwändige Gestellkonstruktion ist aus der nicht vorveröffentlichten WO 2010/111318 A1 bekannt, wobei ebenfalls kastenförmige Strukturen für die Anbringung von Turbinen und Generatoren geoffenbart sind.

Andererseits ist aus US 2009/0072615 A1 eine Vorrichtung zum Vernichten von Energie von Wasserwellen im Küstenbereichen bekannt, um diese Küstenbereiche vor Zerstörungen zu schützen. Diese Vorrichtung weist mehrere Laufräder vertikal übereinander in einem rechteckigen Rahmen auf.

Es ist nun Aufgabe der Erfindung, eine Wasserkraft-Staudruckmaschine wie eingangs angegeben vorzusehen, die eine verbesserte Bauform aufweist, die einerseits eine hohe Flexibilität bzw. Anpassung und andererseits geringe Herstellungskosten ermöglicht, sodass der Betrieb von solchen Staudruckmaschinen in wirtschaftlicher Weise ermöglicht wird.

Zur Lösung dieser Aufgabe sieht die Erfindung eine Wasserkraft -Staudruckmaschine wie in Anspruch 1 definiert vor. Vorteilhafte Ausführungsformen und Weiterbildungen sind in den Unteransprüchen angegeben.

Im Einzelnen zeichnet sich die erfindungsgemäße Wasserkraft-Staudruckmaschine der eingangs angeführten Art vor allem dadurch aus, dass der Lagerrahmen ein in sich geschlossener rechteckiger in der Betriebsstellung vertikaler Lagerrahmen aus zwei horizontalen und zwei vertikalen Formrohr-Trägern ist, die das Laufrad rechteckig umfassen, wobei das Laufrad an den vertikalen Formrohr-Trägern über vor diesen an der stromabwärtigen Seite auskragende Konsolen gelagert ist; an einem der vertikalen Formrohr-Träger (nachstehend auch kurz "Träger") wird weiters eine Getriebe-Generator-Maschine befestigt, um die kinetische Energie des Laufrads in elektrische Energie umzuwandeln.

Bei der vorliegenden Staudruckmaschine ist somit eine Formrohr-Bauform mit vier Formrohr-Trägern für den Lagerrahmen des Laufrads vorgesehen, wobei die vier Träger, zwei vertikale Träger, ein oberer Träger und ein unterer Träger, in Rechteckform rund um das Laufrad, zu einem ebenen zweidimensionalen Gebilde, d.h. einem ebenen, rechteckigen Lagerrahmen, zusammengebaut sind. Die beiden vertikalen, seitlichen Träger oder Formrohre tragen auch die Radlager für das Laufrad.

Gegebenenfalls kann der Lagerrahmen durch zumindest einen weiteren, mittigen, vertikalen Träger, vorzugsweise ebenfalls einen Formrohrteil, unterteilt sein, um axial nebeneinander zumindest zwei Laufräder im Lagerrahmen zu lagern.

Zur Erzielung einer möglichst einfachen Abdichtung des Rotors, d.h. Laufrads, ist es weiters von Vorteil, wenn das Laufrad an seinem axialen Ende durch mit ihm rotierende Deckscheiben abgeschlossen ist. Die vorgenannten Deckscheiben ermöglichen in der Folge insofern eine besonders einfache Abdichtung, als bevorzugt an den vertikalen Trägern des Lagerrahmens Dichtelemente, die an den Deckscheiben anliegen, zur Abdichtung des jeweiligen Laufrads angebracht sind. Die Dichtelemente sind insbesondere durch Bleche gebildet, die an den vertikalen Trägern befestigt sind und sich im Wesentlichen über die Stauhöhe, vorzugsweise vom unteren horizontalen Träger bis in die Höhe der Oberseite der Nabe oder etwas darüber hinaus, erstrecken, und die als eigentliche Dichtelemente elastische Dichtlippen, z.B. aus Kunststoffmaterial oder aber auch aus Blech, tragen.

Um das Wasser tangential von einem oberseitigen Einlaufbereich um das Laufrad herum zu einem unterseitigen Auslaufbereich zu leiten und überdies das Laufrad am Radumfang abzudichten, ist es günstig, wenn auf der stromaufwärtigen Seite an den vertikalen Trägern des Lagerrahmens ein gebogenes Kropfblech, z.B. über auskragende Halter, befestigt ist, dessen Krümmung dem Pfad der radial äußeren Enden der Schaufeln beim Rotieren des Laufrads angepasst ist.

Wie erwähnt ermöglicht die vorliegende Lagerrahmen-Bauform, insbesondere durch die verwendung von Formrohren, ein sehr flexibles, einfaches Baukastenkonzept, wobei eine problemlose Anpassung an die jeweils günstigste Radbreite, zur Einstellung des Schluckvermögens der Staudruckmaschine bei gleicher Stauhöhe, ermöglicht wird. Dabei können, wie bereits erwähnt, auch mehrere Laufräder in einem gemeinsamen Lagerrahmen, der entsprechend durch vertikale Träger unterteilt ist, gelagert und so als Einheit montiert werden. Der Lagerrahmen ist bevorzugt jeweils in einem stationären Gestell angeordnet, das ebenfalls rahmenartig ausgebildet ist, wobei derartige Gestelle samt Lagerrahmen und Laufrädern nebeneinander beliebig kaskadierbar sind.

Bevorzugt ist weiters der jeweilige Lagerrahmen relativ zum stationären Gestell mittels einer Hubvorrichtung vertikal heb- und senkbar angeordnet. Dadurch kann beispielsweise zu Wartungszwecken oder aber in einem Störungsfall die eigentliche Maschine, also die Einheit bestehend aus Lagerrahmen und Laufrad, aus dem Wasser gehoben werden. Die Hubvorrichtung kann dabei bevorzugt mit einem,Zahnstangenantrieb, gegebenenfalls in Verbindung mit einem Nothandbetrieb, mit Kurbel, wie dies an sich etwa von Schleusen bekannt ist, ausgebildet werden, aber auch mit einem Gewindespindelantrieb oder aber mit insbesondere hydraulischen Arbeitszylindern.

Um die Vertikalbewegung des Lagerrahmens relativ zum Gestell möglichst reibungsarm zu gestalten, ist es weiters von Vorteil, wenn der Lagerrahmen an seinen vertikalen Trägern seitlich außen Führungselemente, wie Rollen oder Gleitpads, zur reibungsarmen Führung an korrespondierenden Führungsflächen des stationären Gestells aufweist.

Das vorliegende Konstruktionsprinzip bringt eine wesentliche Vereinfachung in der Konstruktion und Montage der Staudruckmaschinen sowie weiters Einsparungen an Gewicht und Kosten mit sich, sodass die Wirtschaftlichkeit der Staudruckmaschinen wesentlich erhöht wird. Im Fall der Anbringung mehrerer Laufräder in einem Lagerrahmen oder aber einer Kaskadierung können je nach Wasserstand die nebeneinander angeordneten Laufräder bzw. Staudruckmaschinen in Betrieb genommen (wenn entsprechend hohe Wassermengen gegeben sind) oder vereinzelt gesperrt (bei geringen Wassermengen) werden. Zur Absperrung können beispielsweise vertikal in der Art von Schiebern auf und ab bewegbare Sperrbleche verwendet werden, die einen Wasserzulauf örtlich blockieren.

Die Erfindung wird nachfolgend anhand von in der Zeichnung veranschaulichten, besonders bevorzugten Ausführungsbeispielen, auf die sie jedoch nicht beschränkt sein soll, noch weiter erläutert. Im einzelnen zeigen in der Zeichnung:
Fig. 1 eine schaubildliche Ansicht eines Laufrads einer Wasserkraft-Staudruckmaschine, mit seitlich das Laufrad abschließenden Deckscheiben;
die Fig. 2 und 3 ein derartiges Laufrad, angebracht in einem aus Formrohr-Trägern aufgebauten rechteckigen Lagerrahmen, nämlich von der Unterwasserseite her (Fig. 2) bzw. von der Oberwasserseite her (Fig. 3);
die Fig. 4 und 5 zur Veranschaulichung der Flexibilität des vorliegenden Formrohr-Lagerrahmens zwei schaubildliche Darstellungen von Staudruckmaschinen ähnlich Fig. 3 (also von der Oberwasserseite her), mit gleicher Bauhöhe, jedoch einmal mit einem eine relativ kleine axiale Abmessung aufweisenden Laufrad (Fig. 4) und zum anderen mit einem relativ breiten Laufrad (Fig. 5) ;
die Fig. 6 bis 8 schaubildlich verschiedene Staudruckmaschinen, nun mit Hubvorrichtungen zum vertikalen Anheben bzw. Absenken des Lagerrahmens samt Laufrad relativ zu einem stationären Maschinen-Gestell, wobei in Fig. 6 schematisch ein Antrieb mit einer Gewindespindel veranschaulicht ist, in Fig. 7 ein Zahnstangenantrieb, und zwar im Zusammenhang mit einem zwei Laufräder lagernden einheitlichen Lagerrahmen, gezeigt ist, und
in Fig. 8 ein Hubsystem mit einem beispielsweise hydraulischen Arbeitszylinder dargestellt ist; und
Fig. 9 eine kaskadenförmige Anordnung von mehreren Staudruckmaschinen nebeneinander in schaubildlicher Darstellung.

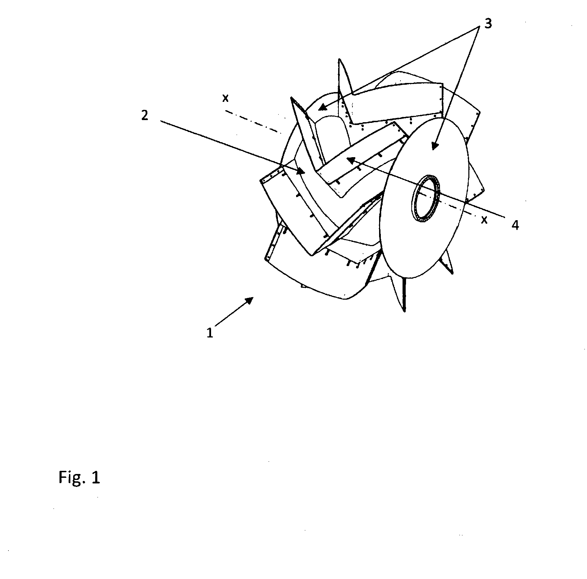

In Fig. 1 ist schaubildlich ein Laufrad 1 für die vorliegende Staudruckmaschine veranschaulicht, wobei dieses Laufrad zur Lagerung in einem Lagerrahmen, wie dieses nachstehend noch näher erläutert wird, gedacht ist. Das Laufrad 1 gemäß Fig. 1 weist eine zylindrische Nabe 2 auf, deren Achse x-x gleichzeitig die Drehachse des Laufrads oder Rotors 1 ist. An dieser Nabe 2 sind an den axialen Enden kreisförmige Deckscheiben 3 fix angebracht, welche die Breite des Rotors oder Laufrads 1 begrenzen. Diese Deckscheiben 3 ermöglichen, wie nachstehend noch mehr im Detail erläutert werden wird, eine vorteilhafte Abdichtung des Laufrads 1 im Lagerrahmen.

Am Umfang der Radnabe 2 sind weiters geeignet geformte Schaufeln 4 angebracht, z.B. angeschweißt, um Taschen für den Wassertransport zu bilden, d.h. den Wasserdruck aufzunehmen und ein Drehmoment um die Radachse x-x zu bewirken.

Die Schaufeln 4 des Laufrads 1 können außer der gezeigten V-förmigen Anordnung auch andere Anordnungen, wie beispielsweise einfache Schräganordnungen (siehe z.B. AT 404 973 B), aufweisen, und sie können auch je nach Zielsetzung eine Krümmung aufweisen.

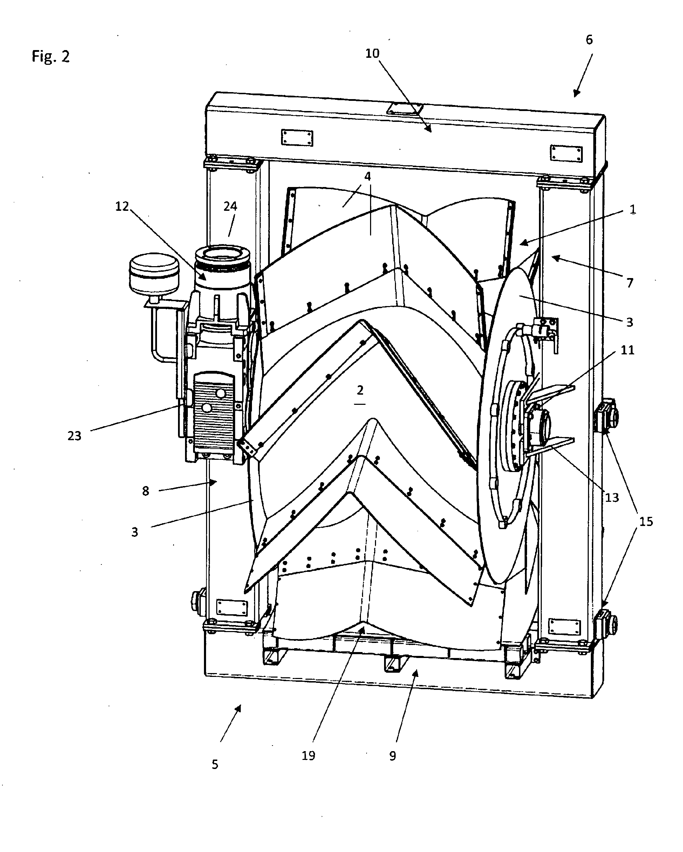

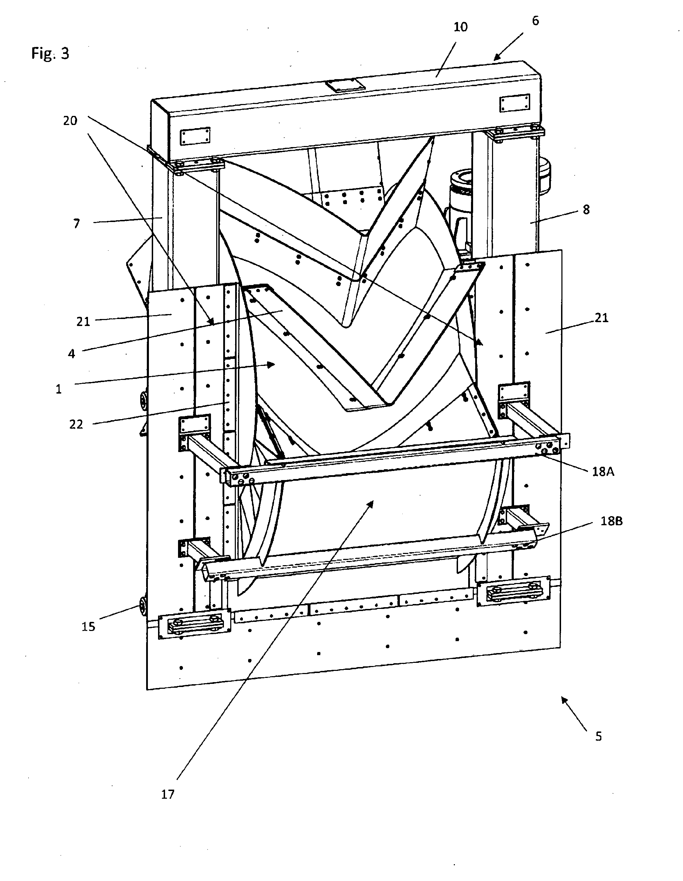

In Fig. 2 ist eine Wasserkraft-Staudruckmaschine 5 mit einem derartigen Laufrad 1, wie in Fig. 1 gezeigt, von der Unterwasserseite her gesehen schaubildlich veranschaulicht. Wie ersichtlich ist, wird das Laufrad 1 in einem insgesamt eine rechteckige Form aufweisenden Lagerrahmen 6 gelagert, der gemäß Fig. 2 (und Fig. 3) mit zwei vertikalen Trägern 7, 8 sowie einem unteren Träger 9 und einem oberen Träger 10 rund um das Laufrad 1 herum gebildet ist. Die Träger 7 bis 10 sind dabei bevorzugt aus im Querschnitt rechteckigen Formrohren gebildet, wodurch eine einfache, leichtgewichtige, dennoch stabile Bauweise des Lagerrahmens 6 erzielt wird, die überdies eine problemlose Anpassung an verschiedene Dimensionen, insbesondere Breiten, von Laufrädern 1 ermöglichen.

Die vertikalen Träger 7, 8 tragen Radlager 11 (in Fig. 2 ist nur eines dieser Lager ersichtlich, das andere ist durch eine Antriebs-Generator-Einheit 12 verdeckt), wobei die Radlager 11 an auskragenden Konsolen 13 befestigt sind, wie aus Fig. 2 ersichtlich ist. Diese Anbringung der Lager 11 ist an der stromabwärtigen Seite (Unterwasserseite) der Staudruckmaschine 5 vorgesehen.

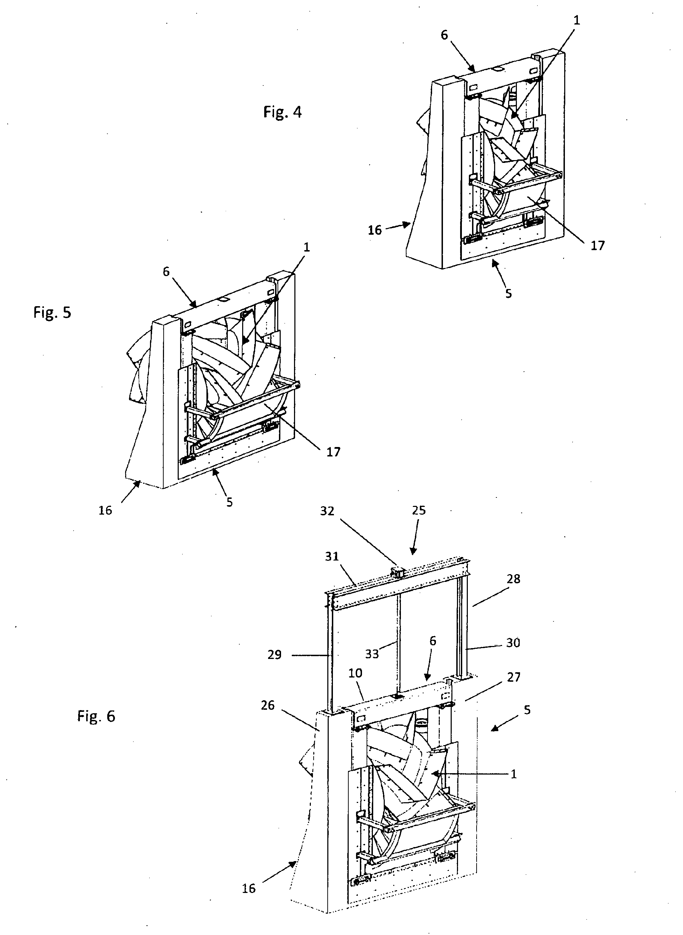

Die vertikalen Träger 7, 8 sind an ihren Außenseiten, also an der vom Laufrad 1 abgewandten Seite, mit Führungsrolleneinheiten oder dergleichen eine reibungsarme Verschiebung des Lagerrahmens 6 in einem stationären Maschinengestell 16 (vgl. Fig. 4 und 5) gewährleistenden Führungselementen 15 ausgestattet, um so eine nachfolgend anhand der Fig. 6 bis 8 noch näher erläuterte Ausführung mit einer Hubvorrichtung für den Lagerrahmen 6 in vorteilhafter Weise zu ermöglichen.

In Fig. 3, die wie erwähnt die Oberwasserseite oder stromaufwärtige Seite der Staudruckmaschine 5 zeigt, ist weiters ein im unteren Bereich des Laufrads 1 angeordnetes, gekrümmtes Kropfblech 17 gezeigt, das mit Hilfe von an den vertikalen Trägern 7, 8 befestigten, hiervon auskragenden Haltern 18A, 18B am Lagerrahmen 6 befestigt ist und eine Krümmung aufweist, die den Bewegungspfad des Laufrads 1 bzw. der Schaufeln 4 des selben angepasst ist. Mit Hilfe dieses Kropfblechs 17 kann somit das Wasser tangential in den unteren Bereich rund um das Laufrad 1 eingeleitet werden, sodass es an der Unterwasserseite (Fig. 2) an der Unterseite des Laufrads 1 in einem Auslaufbereich 19 (Fig. 2) oberhalb des unteren Trägers 9 ausläuft und abfließt.

Weiters ist aus Fig. 3 zu ersehen, dass oberwasserseitig an den vertikalen Trägern bzw. Formrohren 7, 8 Dichtelemente 20 angebracht sind, die jeweils ein am Träger 7 bzw. 8 befestigtes Blech 21 sowie eine daran befestigte Dichtlippe 22 aufweisen. Diese Dichtlippen 22 liegen an der axial äußeren Seite der jeweiligen kreisförmigen Deckscheibe 3 dichtend an. Durch diese Anordnung mit den Dichtelementen 20 sowie weiters mit dem Kropfblech 17 wird erreicht, dass das Wasser des Gerinnes möglichst optimal für die Erzeugung elektrischer Energie genützt wird, d.h. der Wirkungsgrad der gezeigten Staudruckmaschine 5 wird dadurch zusätzlich verbessert.

Die in Fig. 2 gezeigte Einheit 12 weist im einzelnen ein Getriebe 23 auf, mit dem die Drehzahl des Laufrads 1 in eine höhere Drehzahl für den elektrischen Generator 24 umgewandelt wird.

Die Flexibilität des vorliegenden Lagerrahmens 6 zufolge der verwendeten Träger bzw. Formrohre 7 bis 10 ergibt sich unmittelbar aus einem Vergleich der schaubildlichen Darstellungen gemäß Fig. 4 und 5: In Fig. 4 ist eine mit Fig. 3 vergleichbare, relativ schlanke Ausführung einer Staudruckmaschine 5 gezeigt, wogegen in Fig. 5 eine um ungefähr 50% breitere Ausbildung der Staudruckmaschine 5 veranschaulicht ist, die somit bei gleicher Stauhöhe ein entsprechend vergrößertes Schluckvermögen aufweist. Die gezeigte Formrohr-Bauform des Lagerrahmens 6 ermöglicht somit eine Anpassung des jeweiligen Lagerrahmens 6 in der Art eines einfachen Baukastenkonzepts, wobei nicht nur eine Anpassung in der Breite, wie in Fig. 4 und 5 gezeigt, sondern selbstverständlich auch eine Anpassung an den Durchmesser des Laufrads 1, d.h. an die Stauhöhe, durch Verwendung entsprechend längerer, vertikaler Träger 7, 8 möglich ist. Nach Festlegung der Stauhöhe wird das Schluckvermögen (also die im Betrieb durch die Staudruckmaschine 5 transportierte Wassermenge pro Zeit) wieder über die Radbreite - siehe Fig. 4 und 5 - variiert.

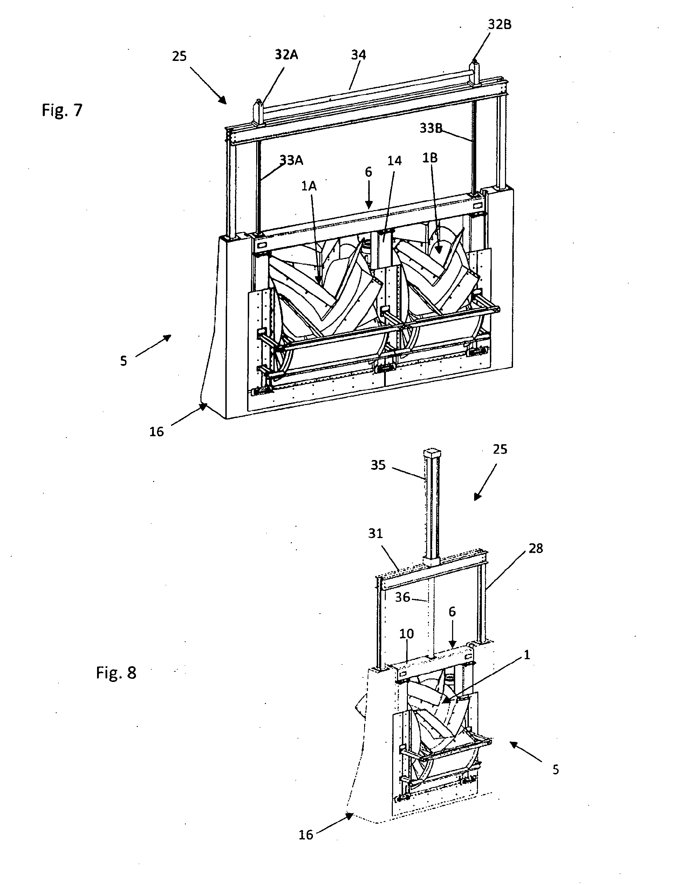

Zusätzlich kann auch vorgesehen werden, beispielsweise zwei Laufräder in einem Lagerrahmen 6 unterzubringen, wie aus Fig. 7 ersichtlich ist, wobei die beiden Laufräder 1A, 1B gemäß Fig. 7 beispielsweise drehmäßig miteinander gekoppelt sind und eine einzige Antriebs-Generator-Einheit (vgl. die Einheit 12 in Fig. 2) antreiben. Der Lagerrahmen 6 ist dabei beispielsweise durch einen mittigen, zusätzlichen vertikalen Träger 14 unterteilt.

In Fig. 7 ist weiters für den "Doppel-Lagerrahmen" 6 eine Hubvorrichtung 25 gezeigt, ähnlich wie auch in den Figuren 6 und 8 Hubvorrichtungen 25, nämlich beispielhaft von jeweils anderer Bauart, veranschaulicht sind.

Mehr im einzelnen ist gemäß Fig. 6, in der wiederum die stromaufwärtige Seite der Staudruckmaschine 5 veranschaulicht ist, am stationären Gestell 16, d.h. an den Oberseiten von dessen vertikalen Trägern 26, 27, ein jochförmiges Gestell 28 mit an vertikalen Trägern 29, 30 oberseitig angebrachten horizontalem Holm 31 gezeigt. An der Oberseite dieses Holms 31 befindet sich eine Antriebseinheit 32, beispielsweise mit einem nicht näher veranschaulichten Elektromotor und einer ortsfest drehbar gelagerten Spindelmutter, wobei letztere mit einer Gewindespindel 33 zusammenarbeitet, die fest am oberen horizontalen Träger 10 des Lagerrahmens 6 fixiert ist. Bei Aktivierung des Elektromotors der Antriebseinheit 32 wird, wenn die Spindelmutter der Antriebseinheit 32 umläuft, die Gewindespindel 33 je nach Umlaufrichtung vertikal nach oben oder aber nach unten verstellt, sodass in entsprechender Weise der Lagerrahmen 6 vertikal gehoben oder gesenkt wird, und zwar relativ zum Gestell 16 der Staudruckmaschine 5.

Auf diese Weise kann im Fall einer Störung oder aber im Fall von Wartungsarbeiten die eigentliche Maschine, d.h. das Laufrad 1 mit dem Lagerrahmen 6 und der Einheit 12, hochgehoben oder aber wieder in das Wasser abgesenkt werden.

Eine derartige Höhenverstellung kann überdies auch dazu genutzt werden, um beispielsweise für den Fall eines unterwasserseitigen Rückstaus, etwa bei Hochwasser, das Laufrad 1 mit seinem Rahmen 6 in geregelter Weise anzuheben, um.einen möglichst optimalen Abstand der Radachse x-x relativ zum Unterwasserpegel einzuhalten. Eine derartige, hierfür vorgesehene Regeleinrichtung enthält beispielsweise einen Pegelsensor zur Erfassung des stromabwärtigen Unterwasserpegels, nämlich in Relation zur Höhe des Laufrads 1 bzw. der Radachse x-x, sowie eine eigentliche Regeleinheit, beispielsweise mit einer SPS-Einheit, um je nach Änderung der Höhe der Radachse x-x relativ zum Unterwasserpegel die Antriebseinheit 32 zu einem Heben oder Senken der Einheit 6-1 anzusteuern. Dies ist jedoch hier nicht näher veranschaulicht.

In der Ausführungsform der Hubvorrichtung 25 gemäß Fig. 7 ist ein Zahnstangenantrieb vorgesehen, wobei beim gezeigten Ausführungsbeispiel von Fig. 7 wegen der größeren Breite des Lagerrahmens 6 und somit der Staudruckmaschine 5, eine Anordnung von zwei seitlichen Zahnstangen 33A, 33B am oberen Träger 10 des Lagerrahmens 6 vorgesehen ist. Diese fix mit dem Lagerrahmen 6 verbundenen Zahnstangen 33A, 33B wirken mit nicht näher gezeigten Zahnrädern in Antriebseinheiten 32A, 32B zusammen, wobei diese Zahnräder zwecks Synchronisation beispielsweise über eine Welle 34 starr miteinander gekoppelt sein können. Dies ermöglicht es auch, nur eine der beiden Antriebseinheiten 32A, 32B mit einem in den Zeichnungen nicht näher ersichtlichen Elektromotor auszustatten.

Es sei erwähnt, dass insbesondere bei einem Zahnstangenantrieb auch ein Nothandbetrieb mit einer der Antriebseinheit 32 zugeordneten Handkurbel (nicht gezeigt) möglich ist. In ähnlicher Weise kann jedoch selbstverständlich auch eine Hubvorrichtung 25 mit Spindeltrieb (siehe Fig. 6) mit einem Nothandbetrieb ausgerüstet werden.

Gemäß Fig. 8 ist eine weitere Variante einer Hubvorrichtung 25 gezeigt, nämlich mit einem beispielsweise hydraulischen Arbeitszylinder 35, der am oberen Holm 31 des Jochs 28, von diesem hochragend, befestigt ist, und dessen Kolbenstange 36 den Holm 31 durchsetzt und fest an dem oberen Träger 10 des Lagerrahmens 6 des Laufrads 1 der Staudruckmaschine 5 befestigt ist.

Selbstverständlich kann anstatt eines hydraulischen Arbeitszylinders auch ein pneumatischer Arbeitszylinder eingesetzt werden.

Weiters ist es auch denkbar, bei einer Mehrfach-Radanordnung wie aus Fig. 7 ersichtlich eine Hubvorrichtung 25 mit zwei (oder mehreren) Arbeitszylindern 35 (vgl. Fig. 8) oder aber mit mehreren (z.B. zwei) seitlichen Gewindespindeltrieben, wie aus Fig. 6 ersichtlich, vorzusehen; andererseits kann bei Einfachanordnungen wie in der Fig. 6 und 8 gezeigt, ebenfalls eine Hubvorrichtung 25 mit Zahnstangenantrieb, wie in Fig. 7 grundsätzlich gezeigt, vorgesehen werden.

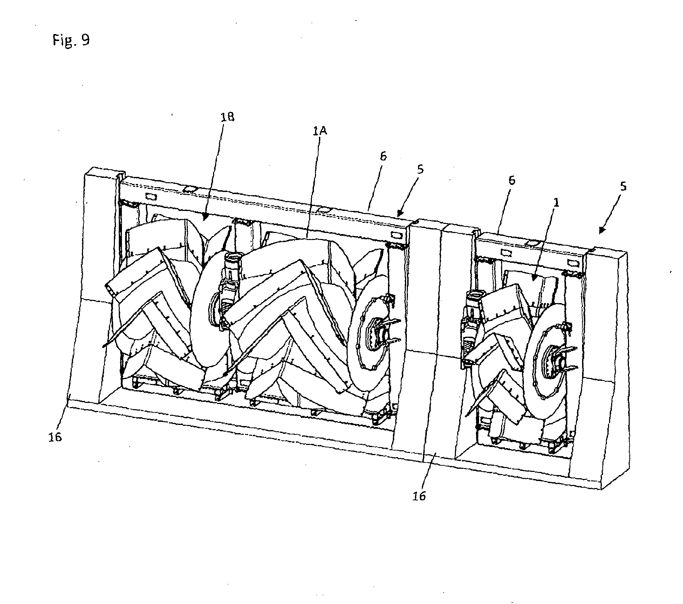

Aus Fig. 9 ist schließlich noch ersichtlich, dass mehrere Anlagen oder Staudruckmaschinen 5, jeweils mit einem stationären Gestell 16 und einem Laufrad 1 bzw. gegebenenfalls auch mehreren Laufrädern 1A, 1B (siehe auch Fig. 7), nebeneinander in Kaskadenform angeordnet werden können, wenn ein entsprechend breites Gerinne vorliegt; mit einer derartigen Kaskadenanordnung kann auch auf einfache Weise variierenden Wassermengen im Gerinne Rechnung getragen werden, wobei beispielsweise im Fall einer geringen Wassermenge die in Fig. 9 auf der rechten Seite gezeigte Staudruckmaschine 5, mit dem einzelnen Laufrad 1, gesperrt werden kann, um so dafür die andere Staudruckmaschine 5, mit den Laufrädern 1A, 1B, in einem optimalen Arbeitsbereich betreiben zu können. Die Sperrung der einzelnen Staudruckmaschinen bzw. Laufräder kann mit Hilfe von in der Zeichnung nicht gezeigten oberwasserseitigen Sperrblechen erfolgen, die beispielsweise vertikal von einer oberen Ruhestellung in eine untere Sperrstellung, unmittelbar vor dem jeweiligen Laufrad, verstellt werden können.

## Patentansprüche

1. Wasserkraft-Staudruckmaschine (5) mit wenigstens einem in einem Lagerrahmen (6) gelagerten Laufrad (1), das eine Nabe (2) und daran angebrachte, von ihr abstehende Schaufeln (4) aufweist, wobei das Laufrad (1) eingerichtet ist, in einem Gerinne angebracht zu werden und im Betrieb eine Wasserpegeldifferenz zwischen seiner stromaufwärtigen Seite und seiner stromabwärtigen Seite im Gerinne herbeizuführen, **dadurch gekennzeichnet, dass** der Lagerrahmen (6) ein in sich geschlossener rechteckiger Lagerrahmen (6) aus zwei in der Betriebsstellung horizontalen (9, 10) und zwei vertikalen Formrohr-Trägern (7, 8) ist, die das Laufrad (1) rechteckig umfassen, wobei das Laufrad (1) an den vertikalen Formrohr-Trägern (7, 8) über von diesen an der stromabwärtigen Seite auskragende Konsolen (13) gelagert ist, und wobei an einem (8) der vertikalen Formrohr-Träger eine Getriebe-Generator-Einheit (12) befestigt ist, die mit dem Laufrad (1) gekuppelt ist.

2. Wasserkraft-Staudruckmaschine nach Anspruch 1, **dadurch gekennzeichnet, dass** der Lagerrahmen (6) durch zumindest einen weiteren, mittigen, vertikalen Träger (14) unterteilt ist, um axial nebeneinander zumindest zwei Laufräder (1A, 1B) zu lagern.

3. Wasserkraft-Staudruckmaschine nach Anspruch 1 oder 2, **dadurch gekennzeichnet, dass** das Laufrad (1) an seinem axialen Ende durch mit ihm rotierende Deckscheiben (3) abgeschlossen ist.

4. Wasserkraft-Staudruckmaschine nach Anspruch 3, **dadurch gekennzeichnet, dass** an den vertikalen Trägern (7, 8) des Lagerrahmens (6) Dichtelemente (20), die an den Deckscheiben (3) anliegen, zur Abdichtung des jeweiligen Laufrads (1) angebracht sind.

5. Wasserkraft-Staudruckmaschine nach Anspruch 4, **dadurch gekennzeichnet, dass** die Dichtelemente (20) durch Bleche (21) mit Dichtlippen (22) gebildet sind.

6. Wasserkraft-Staudruckmaschine nach einem der Ansprüche 1 bis 5, **dadurch gekennzeichnet, dass** auf der stromaufwärtigen Seite an den vertikalen Trägern (7, 8) des Lagerrahmens ein gebogenes Kropfblech (17) über auskragende Halter (18A, 18B) befestigt ist, dessen Krümmung dem Pfad der radial äußeren Enden der Schaufeln (4) beim Rotieren des Laufrads (1) angepasst ist.

7. Wasserkraft-Staudruckmaschine nach einem der Ansprüche 1 bis 6, **dadurch gekennzeichnet, dass** der Lagerrahmen (6) in einem stationären Gestell (16) angeordnet ist.

8. Wasserkraft-Staudruckmaschine nach Anspruch 7, **dadurch gekennzeichnet, dass** der Lagerrahmen (6) relativ zum stationären Gestell (16) mittels einer Hubvorrichtung (25) vertikal heb- und senkbar angeordnet ist.

9. Wasserkraft-Staudruckmaschine nach Anspruch 8, **dadurch gekennzeichnet, dass** der Lagerrahmen (6) an seinen vertikalen Trägern (7, 8) seitlich außen Führungselemente (15), wie Rollen oder Gleitpads, zur reibungsarmen Führung an korrespondierenden Führungsflächen des stationären Gestells (16) aufweist.

## Claims

1. A water power dynamic pressure machine (5) comprising at least one blade wheel (1) mounted in a bearing frame (6) which blade wheel comprises a hub (2) and blades (4) attached thereto and projecting therefrom, wherein the blade wheel (1) is adapted to be arranged in a raceway and to cause, in operation, a water level difference between its upstream side and its downstream side in the raceway, **characterized in that** the bearing frame (6) is a self-contained rectangular bearing frame (6) of two profiled pipe carriers (9, 10) which are horizontal in the operating position and two vertical profiled pipe carriers (7, 8) which encompass the blade wheel (1) in a rectangular manner, wherein the blade wheel (1) is mounted on the vertical profiled pipe carriers (7, 8) via brackets (13) protruding therefrom at the downstream side, and wherein a gear-generator-unit (12) is fastened to one (8) of the vertical profiled pipe carriers, said gear-generator-unit (12) being coupled with the blade wheel (1).

2. The water power dynamic pressure machine according to claim 1, **characterized in that** the bearing frame (6) is divided by at least one further, central, vertical carrier (14) so as to bear at least two blade wheels (1A, 1B) axially side by side.

3. The water power dynamic pressure machine according to claims 1 or 2, **characterized in that** the blade wheel (1) is closed at the axial end thereof by cover plates (3) rotating therealong.

4. The water power dynamic pressure machine according to claim 3, **characterized in that** sealing elements (20) abutting on the cover plates (3) are arranged at the vertical carriers (7, 8) of the bearing frame (6) for sealing the respective blade wheel (1).

5. The water power dynamic pressure machine according to claim 4, **characterized in that** the sealing elements (20) are formed by sheets (21) with sealing lips (22).

6. The water power dynamic pressure machine according to any of claims 1 to 5, **characterized in that** a bent canker sheet (17) is fastened to the vertical carriers (7, 8) of the bearing frame by means of protruding supports (18A, 18B) at the upstream side , the curvature of the canker sheet being adapted to the path of the radially outer ends of the blades (4) during rotation of the blade wheel (1).

7. The water power dynamic pressure machine according to any of claims 1 to 6, **characterized in that** the bearing frame (6) is arranged in a stationary rack (16).

8. The water power dynamic pressure machine according to claim 7, **characterized in that** the bearing frame (6) is arranged to be lifted and lowered vertically relative to the stationary rack (16) by means of a lifting device (25).

9. The water power dynamic pressure machine according to claim 8, **characterized in that** the bearing frame (6) comprises guiding elements (15) such as rolls or sliding pads at the outer sides of its vertical carriers (7, 8) for the purpose of low-friction guidance at corresponding guiding faces of the stationary rack (16).

## Revendications

1. Machine hydraulique à pression dynamique (5) comprenant au moins une roue à augets (1), supportée dans un cadre support (6), qui comporte un moyeu (2) et des augets (4) fixés sur et dépassant dudit moyeu, la roue à augets (1) étant configurée pour être disposée dans un chenal et pour générer en fonctionnement une différence de niveau d'eau entre son côté amont et son côté aval dans le chenal, **caractérisée en ce que** le cadre support (6) est un cadre support (6) rectangulaire fermé sur lui-même, constitué de deux poutres en profilé tubulaire horizontales (9, 10) dans la position de fonctionnement et de deux poutres en profilé tubulaire verticales (7, 8) qui entourent la roue à augets (1) en formant un rectangle, la roue à augets (1) étant supportée sur les poutres en profilé tubulaire verticales (7, 8) par le biais de consoles (13) en saillie desdites poutres côté aval et un ensemble générateur à engrenage (12) couplé à la roue à augets (1) étant fixé à une (8) des poutres en profilé tubulaire verticales.

2. Machine hydraulique à pression dynamique selon la revendication 1, **caractérisée en ce que** le cadre support (6) est divisé par au moins une autre poutre verticale (14) centrale afin de supporter au moins deux roues à augets (1A, 1B) disposées côte à côte dans le sens axial.

3. Machine hydraulique à pression dynamique selon la revendication 1 ou la revendication 2, **caractérisée en ce que** la roue à augets (1) est fermée à son extrémité axiale par des flasques de fermeture (3) qui tournent avec elle.

4. Machine hydraulique à pression dynamique selon la revendication 3, **caractérisée en ce que** des éléments d'étanchéité (20) en appui sur les flasques de fermeture (3) sont montés sur les poutres verticales (7, 8) du cadre support (6) afin de rendre étanche la roue à augets (1) associée.

5. Machine hydraulique à pression dynamique selon la revendication 4, **caractérisée en ce que** les éléments d'étanchéité (20) sont formés par des tôles (21) pourvues de joints à lèvres (22).

6. Machine hydraulique à pression dynamique selon l'une des revendications 1 à 5, **caractérisée en ce qu'**une tôle cintrée (17) est fixée côté amont aux poutres verticales (7, 8) du cadre support par le biais de supports en saillie (18A, 18B), le cintrage de ladite tôle étant adapté à la trajectoire des extrémités radialement extérieures des augets (4) lors de la rotation de la roue à augets (1).

7. Machine hydraulique à pression dynamique selon l'une des revendications 1 à 6, **caractérisée en ce que** le cadre support (6) est disposé dans un châssis fixe (16).

8. Machine hydraulique à pression dynamique selon la revendication 7, **caractérisée en ce que** le cadre support (6) est disposé par rapport au châssis fixe (16) de manière à pouvoir être relevé et abaissé verticalement au moyen d'un dispositif de levage (25).

9. Machine hydraulique à pression dynamique selon la revendication 8, **caractérisée en ce que** le cadre support (6) comporte sur le côté extérieur de ses poutres verticales (7, 8) des éléments de guidage (15), tels que des galets ou des patins, permettant un guidage à faible frottement sur des surfaces de guidage correspondantes du châssis fixe (16).
